# EUROPEAN PATENT APPLICATION

(11) **EP 0 733 639 A1**
(43) Date of publication of application: **25.09.1996**
(21) Application number: 96810152.7
(22) Date of filing: 12.03.1996
(51) Int. Cl.: C07F 9/6574, C08K 5/527

(54) **Novel cyclic pyrophosphites and compositions stabilized therewith**

(30) Priority: 21.03.1995 US 407742
(71) Applicant: CIBA-GEIGY AG, 4002 Basel (CH)
(72) Inventor: Shum, Sai Ping, Highstown, NJ 08520 (US); Pastor, Stephen Daniel, Danbury, CT 06810 (US); Smith, Andrea R., Wingdale, NY 12594 (US)

(57) **Abstract**

Novel cyclic pyrophosphites of formula I 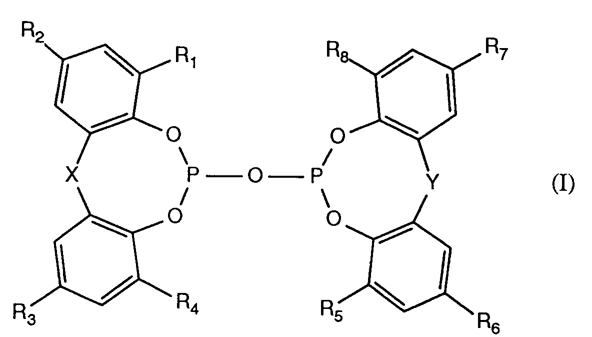
are prepared from the corresponding 6-chloro and 6-oxo phosphepins or phosphocins. The cyclic pyrophosphites are effective processing stabilizers for organic materials subject to oxidative, thermal or light-induced degradation, particularly polyolefins and especially polypropylene.

## Description

The instant invention pertains to novel cyclic pyrophosphites, to compositions comprising an organic material, preferably a polymer, and the novel cyclic pyrophosphites, and to the use thereof for stabilizing organic materials against oxidative, thermal or light-induced degradation.

The use of organic trivalent phosphorus compounds, such as organic phosphites and phosphonites, for the stabilization of polymeric substrates subject to oxidative, thermal and/or light-induced degradation is known. U.S. Patent Nos. 4,143,028; 4,318,845; 4,374,219; 4,524,166; 4,912,155 and 4,999,393 describe the use of seven- and eight-membered dibenzo[d,f][1,3,2]dioxaphosphepins and dibenzo[d,g][1,3,2]dioxaphosphocins as effective stabilizers for organic materials.

J. D. Spivack et al., Polymer Stabilization and Degradation, P. P. Klemchuk, editor, American Chemical Society, Washington, D.C., 1985, 247-257, describe the use of hydrolytically-stable seven- and eight-membered dibenzo[d,f][1,3,2]dioxaphosphepins and dibenzo[d,g][1,3,2]dioxaphosphocins, respectively, as processing stabilizers. The detailed synthesis, spectroscopic data and structural conformation of seven- and eight-membered dibenzo[d,f][1,3,2]dioxaphosphepins and dibenzo[d,g][1,3,2]dioxaphosphocins are described by S. D. Pastor et al. in Phosphorus and Sulfur, 15, 9 and 253 (1983); J. Heterocyclic Chem., 20, 1311 (1983); Phosphorus and Sulfur, 19, 1 and 285 (1984), Helv. Chim. Acta, 76, 900 (1993) and U.S. Patent No. 5,292,785.

U.S. Patent No. 4,481,317 discloses the synthesis of higher molecular weight hindered bisphenol diphosphonites and their use as stabilizers for polyolefins for protection against ultraviolet light and as protection for the high temperature processing of the polymer.

Japanese Sho 46/2902 reports that low molecular weight acyclic pyrophosphites are known and are useful as process stabilizers for PVC and PVC/ABS copolymers. Neither the cyclic pyrophosphites nor their use as stabilizers for organic materials subject to oxidative, thermal or light-induced degradation is described or suggested by the prior art.

One object of this invention is to provide new cyclic pyrophosphites.

Another object is to provide organic compositions stabilized against oxidative, thermal and/or light-induced degradation by the presence of said new cyclic pyrophosphites either alone or in combination with a hindered phenolic antioxidant, a hindered amine thermal stabilizer, a hydroxylamine, a benzofuran-2-one or mixture thereof.

The instant invention pertains to new cyclic pyrophosphites of formula I 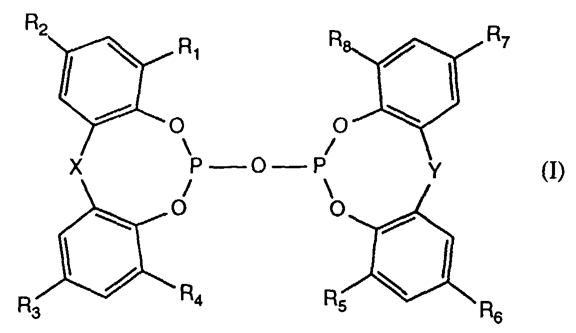 wherein
X and Y are independently a direct bond, -S- or -CR₉R₁₀-,
R₁, R₂, R₃, R₄, R₅, R₆, R₇ and R₈ are independently hydrogen, alkyl of 1 to 18 carbon atoms, cycloalkyl of 5 to 12 carbon atoms or phenylalkyl of 7 to 15 carbon atoms,
R₉ is hydrogen or alkyl of 1 to 18 carbon atoms, and
R₁₀ is hydrogen, alkyl of 1 to 18 carbon atoms or phenyl.

Alkyl of up to 18 carbon atoms is a branched or unbranched radical, typically methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, tert-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl or octadecyl. One of the preferred meaning of R₁, R₂, R₃, R₄, R₅, R₆, R₇ and R₈ is C₁-C₁₂alkyl, preferably C₁-C₈alkyl, e.g. C₁-C₆alkyl. A particularly preferred meaning of R₁, R₂, R₃, R₄, R₅, R₆, R₇ and R₈ is C₁-C₄alkyl, most preferably tert-butyl. A preferred meaning of R₉ and R₁₀ is C₁-C_{S2}alkyl, preferably C₁-C₈alkyl, e.g. C₁-C₆alkyl. A particularly preferred meaning of R₉ and R₁₀ is C₁-C₄alkyl, preferably methyl.

Cycloalkyl of 5 to 12 carbon atoms is typically cyclopentyl, cyclohexyl, cycloheptyl, cyclooctyl, cyclononyl, cyclodecyl, cycloundecyl or cyclododecyl. A particularly preferred meaning of R₁, R₂, R₃, R₄, R₅, R₆, R₇ and R₈ is C₅-C₈cycloalkyl, most preferably cyclohexyl.

Phenylalkyl of 7 to 15 carbon atoms which is unsubstituted or substituted at the phenyl radical by C₁-C₄alkyl and which preferably contains 1 to 3, more particularly 1 or 2, branched or unbranched alkyl groups is typically benzyl, α-methylbenzyl, α,α-dimethylbenzyl, 2-phenylethyl, 2-methylbenzyl, 3-methylbenzyl, 4-methylbenzyl, 2,4-dimethylbenzyl, 2,6-dimethylbenzyl or 4-tert-butylbenzyl. Benzyl is preferred.

A particularly preferred group -CR₉R₁₀- is methylene, ethylidene, 2,2-isopropylidene, 1,1-butylidene, 1,1-octylidene and benzylidene.

Preferred compounds of formula I are those wherein X and Y are independently a direct bond or -CR₉R₁₀-,
R₁, R₂, R₃, R₄, R₅, R₆, R₇ and R₈ are independently hydrogen, alkyl of 1 to 12 carbon atoms, cycloalkyl of 5 to 8 carbon atoms or phenylalkyl of 7 to 12 carbon atoms,
R₉ is hydrogen or alkyl of 1 to 12 carbon atoms, and
R₁₀ is hydrogen, alkyl of 1 to 12 carbon atoms or phenyl.

Other preferred compounds of formula I are those wherein R₁, R₂, R₃, R₄, R₅, R₆, R₇ and R₈ are independently alkyl of 1 to 8 carbon atoms or cyclohexyl.

Also preferred are compounds of formula I, wherein R₁, R₂, R₃, R₄, R₅, R₆, R₇ and R₈ are independently alkyl of 1 to 4 carbon atoms.

Particularly preferred compounds of formula I are those wherein X and Y are independently a direct bond or -CR₉R₁₀-,
R₉ is hydrogen, and
R₁₀ is hydrogen, methyl or phenyl.

Compounds of formula I meriting particular interest are those wherein X and Y are independently a direct bond or -CR₉R₁₀-,
R₁, R₂, R₃, R₄, R₅, R₆, R₇ and R₈ are tert-butyl,
R₉ is hydrogen, and
R₁₀ is hydrogen or methyl.

The novel compounds of formula I may be prepared in per se known manner.

The invention furthermore relates to a preferred process for the preparation of compounds of formula I, which comprises reacting a compound of formula II 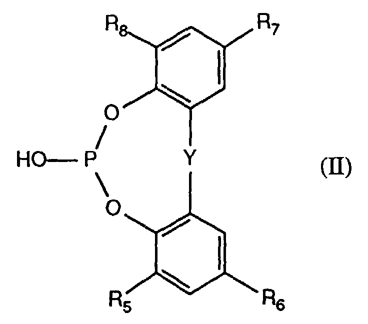 wherein Y, R₅, R₆, R₇ and R₈ have the given meanings, with a cyclic halophosphite of formula III 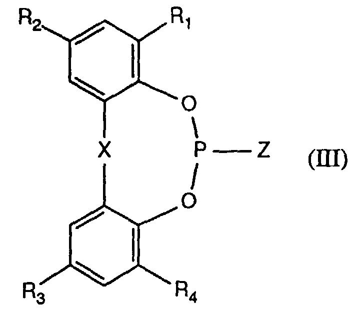 wherein X, R₁, R₂, R₃ and R₄ have the given meanings, and Z is chloro, bromo or iodo.

It is preferred to use the compounds of formula III, wherein Z is chloro.

The reaction is carried out in the melt or in the presence of a suitable organic, polar or nonpolar aprotic solvent. This reaction is preferably carried out in the presence of a base in the temperature range from -20°C to the boiling point of the solvent, more particularly from 20 to 150°C.

Bases, such as amines, may simultaneously also be used as solvent.

The base can be used in different amounts, from catalytic through stoichiometric amounts up to an excess of several times the molar amount with respect to the compounds of formula II or the compounds of formula III. The hydrogen halide formed during the reaction is converted with the base, when used, into a halide, which can then be removed by filtration and/or washing with a suitable aqueous or solid phase. A second, water-immiscible, solvent may also be used in this case. The products are expediently isolated by evaporating the organic phase and drying the residue.

Suitable solvents for carrying out the reaction include hydrocarbons (typically mesitylene, toluene, xylene, hexane, pentane or other petroleum ether fractions), halogenated hydrocarbons (typically di- or trichloromethane, 1,2-dichloroethane, 1,1,1-trichloroethane or chlorobenzene), ethers (typically diethyl ether, dibutyl ether or tetrahydrofuran), ketones (typically acetone, ethyl methyl ketone, diethyl ketone, methyl propyl ketone or cyclohexanone), and also acetonitrile, butyl acetate, dimethyl formamide, dimethyl sulfoxide or N-methylpyrrolidone.

Suitable bases include primary, secondary and, preferably, tertiary amines (typically trimethylamine, triethylamine, tributylamine, N,N-dimethylaniline, N,N-diethylaniline or pyridine), alcoholates (e.g. sodium methylate), alkali metal hydroxides (e.g. sodium hydroxide or potassium hydroxide), or alkali metal carbonates (e.g. sodium carbonate or potassium carbonate). Tertiary amines are particularly preferred, in particular triethylamine.

The preparation of the compounds of formulae II and III is known.

The cyclic halophosphites of formula III are known or can be prepared by the known methods described, inter alia, in GB-A-2 250 990, EP-A-0 540 025, EP-A-0 349 895 or EP-A-0 312 915.

The novel compounds of formula I are suitable for stabilizing organic materials against oxidative, thermal or light-induced degradation.

Illustrative examples of such materials are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/-isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/-propylene/diene terpolymer; and block copolymers of styrene such as styrene/butadiene/-styrene, styrene/isoprene/styrene, styrene/ethylene/butylene/styrene or styrene/ethylene/-propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/-alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.
31. Polysiloxanes such as the soft, hydrophilic polysiloxanes described, for example, in U.S. Patent No. 4,259,467; and the hard polyorganosiloxanes described, for example, in U.S. Patent No. 4,355,147.
32. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.
33. Radiation curable compositions containing ethylenically unsaturated monomers or oligomers and a polyunsaturated aliphatic oligomer.
34. Epoxymelamine resins such as light-stable epoxy resins crosslinked by an epoxy functional coetherified high solids melamine resin such as LSE-4103 (Monsanto).

Accordingly the invention also relates to compositions comprising (a) an organic material susceptible to oxidative, thermal or light-induced degradation, and (b) at least one compound of formula I.

The organic materials to be protected are preferably natural, semi-synthetic or, more particularly, synthetic polymers. Thermoplastic polymers are particularly preferred, more particularly PVC or polyolefins, most preferably polyethylene and polypropylene.

To be particularly highlighted is the action of the novel compounds against thermal and oxidative degradation, in particular when subjected to heat, as in the processing of thermoplasts. The novel compounds are thus admirably suited for use as processing stabilizers.

The compounds of formula I are preferably added to the material to be stabilized in amounts of 0.01 to 5%, typically of 0.01 to 3%, preferably of 0.05 to 3%, more preferably of 0.05 to 1%, based on the weight of the organic material to be stabilized.

In addition to the compounds of formula I, the novel compositions may contain further costabilizers, typically as the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methyl-undec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.

1.4. Tocopherols, for example α-tocopherol, β-tocopherol, γ-tocopherol, δ-tocopherol and mixtures thereof (Vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thio-bis(6-tert-butyl-2-methylphenol), 4,4'-thiobis-(3,6-di-sec-amylphenol), 4,4'-bis-(2,6-dimethyl-4-hydroxyphenyl) disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylene-bis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tort-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tent-butyl-4-hydroxy-2-methylphenyl)buune, 2,6-bis(3-tert-butyl-5-methyl-2-hydroxybenzyl)-4-methylphenol,1,1,3-tris(5-tert-butyl4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy2-methylphenyl)pentane.

1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)-amine, bis(4-tert-butyl-3-hydroxy-2,6-dimethylbenzyl)dithioterephthalate, bis(3,5-di-tert-butyl-4-hydroxybenzyl)sulfide, isooctyl-3,5di-tert-butyl-4-hydroxybenzylmercaptoacetate.

1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, bis-[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine Compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]-octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicydo-[2.2.2]octane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl- 1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)-diphenylamine, N,N'-dimethyl-N,N'-di-sec-butyl-p-phenylenediamine, diphenylamine, N-allyldiphenylamine, 4-isopropoxydiphenylamine, N-phenyl-l-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylamino-phenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, Bis[4-(1',3'-dimethylbutyl)phenyl]amine, tert-octylated N-phenyl- 1-naphthylamine, a mixture of mono- and dialkylated tert-buryl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octylphenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.

### 2. UV absorbers and light stabilizers

2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3 ,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(a,a-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO(CH₂)₃ 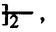 , where R = 3'-tert-butyl-4'-hydroxy-5'-2H-benzotriazol-2-ylphenyl.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, as for example 4-tertbutylphenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl a-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decan-2,4-dion, bis(1-octyloxy-2,2,6,6-tetramethylpiperidyl)sebacate, bis(1-octyloxy-2,2,6,6-tetramethylpiperidyl)succinate, the condensate of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl )-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy-and 4-stearyloxy-2,2,6,6-tetramethylpiperidine, a condensation product of N,N'-bis-(2,2,6,6-tetramethyl-4-piperidyl)hexamethylenediamine and 4-cyclohexylamino-2,6-dichloro-1,3,5-triazine, a condensation product of 1 ,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide and mixtures of ortho- and para-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl) 1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine.

3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine , 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)-thiopropionyl dihydrazide.

4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methylphenyl)methylphosphite, bis(2,4-di-tert-butyl-6-methylphenyl)ethylphosphite.

5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example, N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridecyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.

7. Thiosynergists, for example, dilauryl thiodipropionate or distearyl thiodipropionate.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polyamide stabilizers, for example, copper salts in combination with iodides and/or phosphorus compounds and salts of divalent manganese.

10. Basic co-stabilizers*,* for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or tin pyrocatecholate.

11. Nucleating agents, for example, inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers ("ionomers").

12. Fillers and reinforcing agents, for example, calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

13. Other additives, for example, plasticisers, lubricants, emulsifiers, pigments, rheology additives, catalysts, flow-control agents, optical brighteners, flameproofing agents, antistatic agents and blowing agents.

14. Benzofuranones and indolinones, for example those disclosed in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 or EP-A-0 591 102 or 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]-phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one.

With the exception of the benzofuranones listed in item 14, the costabilizers are added typically in concentrations of 0.01 to 10%, based on the total weight of the material to be stabilized.

Further preferred compositions comprise, besides component (a) and the compounds of formula I, further additives, preferably phenolic antioxidants, light stabilizers and/or processing stabilizers.

Particularly preferred additives are phenolic antioxidants (item 1 in the list), sterically hindered amines (item 2.6 in the list), phosphites and phosphonites (item 4 in the list) and peroxide scavengers (item 8 in the list).

Most preferred phenolic antioxidants are neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tent-butyl-4-hydroxybenzyl)benzene, 1,3,5-tris(3,5-di-tert-butyl-4-hydroxybenzyl)isocyanurate, 2,6-di-tert-butyl-p-cresol or 2,2'-ethylidene-bis-(4,6-di-tert-butylphenol).

Most preferred sterically hindered amine compounds are bis(2,2,6,6-tetramethylpiperidin-4-yl) sebacate, the polycondensation product of 1-(2-hydroxyethyl)-2,2,6,6-tetramethyl-4-hydroxypiperdine and succinic acid, the polycondensation product of 2,4-dichloro-6-tert-octylamino-s-triazine and 4,4'-hexamethylenebis(amino-2,2,6,6-tetramethylpiperidine), N,N',N",N"'-tetrakis[(4,6-bis(butyl-(2,2,6,6-tetramethyl-piperidin-4-yl)-amino)-s-triazine-2-yl]- 1,1 0-diamino-4,7-diazadecane or bis(1-octyloxy-2,2,6,6-tetramethylpiperidin-4-yl) sebacate.

Further additives (stabilizers) which are also particularly preferred are benzofuran-2-ones, such as those disclosed, inter alia, in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 and EP-A-0 591 102.

Examples of such benzofuran-2-ones are compounds of formula 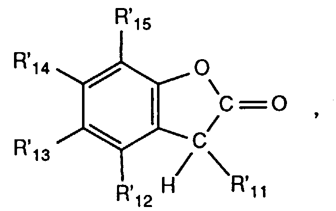 wherein
R'₁₁ is an unsubstituted or substituted carbocyclic or heterocyclic aromatic ring system;
R'₁₂ is hydrogen;
R'₁₄ is hydrogen, alkyl of 1 to 12 carbon atoms, cyclopentyl, cyclohexyl or chloro;
R'₁₃ has the meaning of R'₁₂ or R'₁₄ or is a radical of formula 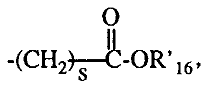 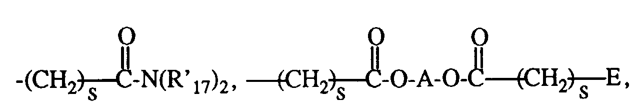 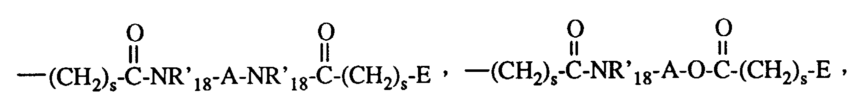 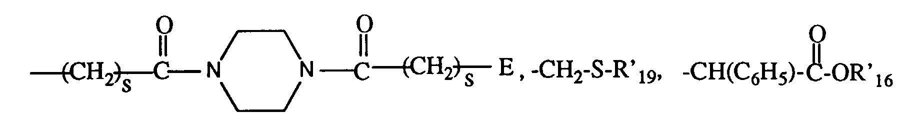 or -D-E, wherein
R'₁₆ is hydrogen, alkyl of 1 to 18 carbon atoms, alkyl of 2 to 18 carbon atoms which is interrupted by oxygen or sulfur, dialkylaminoalkyl having a total of 3 to 16 carbon atoms, cyclopentyl, cyclohexyl, phenyl or phenyl which is substituted by 1 to 3 alkyl radicals having a total of at most 18 carbon atoms;
s is 0,1 or 2; substituents R'₁₇ are each independently of one another hydrogen, alkyl of 1 to 18 carbon atoms, cyclopentyl, cyclohexyl, phenyl; phenyl which is substituted by 1 or 2 alkyl radicals having a total of at most 16 carbon atoms, a radical of formula -C₂H₄OH, ^{-C}2^{H}4^{-O-C}t^{H}2t+1 ^{or} 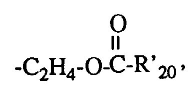 or, together with the linking nitrogen atom, form a piperidine or morpholine radical;
t is 1 to 18;
R'₂₀ is hydrogen, alkyl of 1 to 22 carbon atoms, or cycloalkyl of 5 to 12 carbon atoms; A is alkylene of 2 to 22 carbon atoms which may be interrupted by nitrogen, oxygen or sulfur;
R'₁₈ is hydrogen, alkyl of 1 to 18 carbon atoms, cyclopentyl, cyclohexyl, phenyl; phenyl which is substituted by 1 or 2 alkyl radicals having a total of at most 16 carbon atoms, or benzyl;
R'₁₉ is alkyl of 1 to 18 carbon atoms;
D is -O-, -S-, -SO-, -SO₂- or -C(R'₂₁)₂-;
substituents R'₂₁ are each independently of one another hydrogen, C₁-C₁₆alkyl, the two R'₂₁ radicals together containing 1 to 16 carbon atoms, and R'₂₁ is furthermore phenyl or a radical of formula 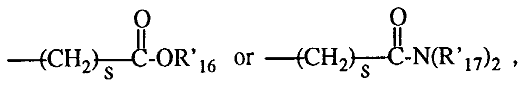 wherein s, R'₁₆ and
R'₁₇ are as defined above;
E is a radical of formula 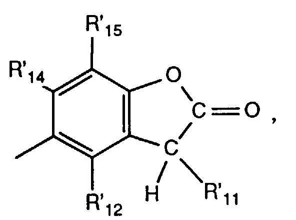 wherein R'₁₁, R'₁₂ and R'₁₄ are as defined above; and
R'₁₅ is hydrogen, alkyl of 1 to 20 carbon atoms, cyclopentyl, cyclohexyl, chloro, or a radical of formula 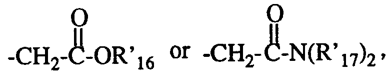 wherein R'₁₆ and R'₁₇ are as defined above, or R'₁₅ and R'_{14,} taken together, torm a tetramethylene radical.

Preferred benzofuran-2-ones are those wherein R'₁₃ is hydrogen, alkyl of 1 to 12 carbon atoms, cyclopentyl, cyclohexyl, chloro or a radical of formula 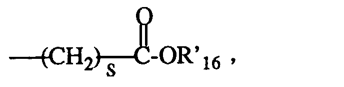 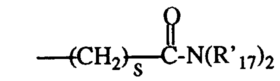 or -D-E, wherein s, R'₁₆, R'₁₇, D and E are as defined above, and

R'₁₆ is preferably hydrogen, alkyl of 1 to 18 carbon atoms, cyclopentyl or cyclohexyl.

Preferred benzofuran-2-ones are also those wherein R'₁₁ is phenyl or phenyl which is substituted by 1 or 2 alkyl radicals having a total of at most 12 carbon atoms; R'₁₂ is hydrogen; R'₁₄ is hydrogen or alkyl of 1 to 12 carbon atoms; R'₁₃ is hydrogen, alkyl of 1 to 12 carbon atoms, 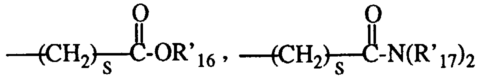 or -D-E; R'₁₅ is hydrogen, alkyl of 1 to 20 carbon atoms, 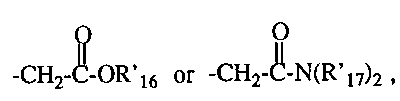 or R'₁₅ and R'₁₄, taken together, form a tetramethylene radical, in which groups s, R'₁₆, R'₁₇, D and E are as defined at the outset.

Particularly interesting benzofuran-2-ones are also those wherein R'₁₃ is hydrogen, alkyl of 1 to 12 carbon atoms or -D-E; R'₁₂ and R'₁₄ are each independently of the other hydrogen or alkyl of 1 to 4 carbon atoms; R'₁₅ is alkyl of 1 to 20 carbon atoms, and D and E are as defined at the outset.

Of particular interest are finally also those benzofuran-2-ones, wherein R'₁₃ is alkyl of 1 to 4 carbon atoms or -D-E; R'₁₂ and R'₁₄ are hydrogen; R'₁₅ is alkyl of 1 to 4 carbon atoms, cyclopentyl or cyclohexyl, D is a -C(R'₂₁)₂- group, and E is a radical of formula 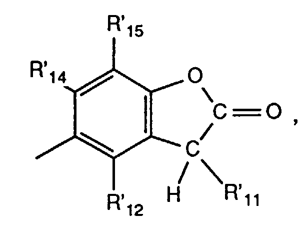 the substituents R'₂₁ being identical or different and are each alkyl of 1 to 4 carbon atoms, and R'₁₁, R'₁₂, R'₁₄ and R'₁₅ are as defined above.

The amount of benzofuran-2-ones additionally employed can vary within wide limits. The novel compositions may typically contain them in amounts of 0.0001 to 5 % by weight, preferably of 0.001 to 2 % by weight, most preferably of 0.01 to 2 % by weight.

The compounds of formula I and any further additives are incorporated into the polymeric organic material by known methods, typically before or during shaping or alternatively by applying the dissolved or dispersed compounds to the polymeric organic material, with subsequent evaporation of the solvent, when used. The compounds of formula I can also be added to the materials to be stabilized in the form of a masterbatch which contains these compounds in a concentration of typically 2.5 to 25 % by weight.

The compounds of formula I can also be added before or during polymerisation or before crosslinking.

The compounds of formula I can be incorporated into the material to be stabilized in pure form or encapsulated in waxes, oils or polymers.

The compounds of formula I can also be sprayed onto the polymer to be stabilized. They are able to dilute other additives (e.g. the conventional additives mentioned above) or their melts, so that they can also be sprayed onto the polymer to be stabilized together with these additives. Application by spraying during deactivation of the polymerisation catalysts is particularly advantageous, in which case the steam used for the deactivation may be used for spraying.

In the case of bead polymerized polyolefins, the compounds of formula I may be usefully applied by spraying, if desired together with other additives.

The materials stabilized in this manner can be used in a very wide range of forms, typically including sheets, filaments, ribbons moulded articles, profiles or as binders for paints, adhesives or putties.

As already mentioned, the organic materials to be protected are preferably organic polymers, more particularly synthetic polymers. It is especially useful to protect thermoplastic materials and, preferably, polyolefins. To be highlighted in this connection is in particular the excellent action of the compounds of formula I as processing stabilizers (heat stabilizers). For this purpose, they are usefully added to the polymer before or during processing. However, other polymers (e.g. elastomers) or lubricants or hydraulic fluids can also be stabilized against degradation, such as light-induced or thermal oxidative degradation. Examples of elastomers will be found in the above list of possible organic materials.

Suitable lubricants and hydraulic fluids may be based on mineral or synthetic oils, or mixtures thereof. The lubricants are known to the person skilled in the art and are described in the relevant technical literature, for example in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) and in "Ullmanns Enzyklopädie der technischen Chemie", Vol. 13, pages 85-94 (Verlag Chemie, Weinheim, 1977).

The lubricating oil may be a mineral oil, a synthetic oil or any mixture of such oils. Mineral oils are preferred and examples of these include paraffinic hydrocarbon oils e.g. a mineral oil having a viscosity of 46 mm²/s at 40°C; "150 Solvent Neutral" a solvent refined neutral mineral oil having a viscosity of 32 mm²/s at 40°C; and "solvent bright-stocks", a high boiling residue from the process of refining mineral oil, and having a viscosity of 46 mm²/s at 40°C.

Synthetic lubricating oils which may be present may be synthetic hydrocarbons such as polybutenes, alkyl benzenes and poly-alpha olefins as well as simple di-, tri- and tetra-esters, complex esters and polyesters derived from carboxylic acid esters of formula: G₁-OCC-alkylene-COOG₂ wherein "alkylene" denotes an alkylene residue having from 2 to 14 carbon atoms and G₁ G₂ are the same or different and each is an alkyl group having from 6 to 18 carbon atoms. Tri-esters which are of use as lubricating oil base stocks are those derived from trimethylolpropane and C₆-C₁₈ mono-carboxylic acids or mixtures thereof, whereas suitable tetra-esters include those derived from pentaerythritol and a C₆-C₁₈ mono-carboxylic acid or mixtures thereof.

Complex esters suitable for use as components of the composition of the present invention are those derived from monobasic acids, dibasic acids and polyhydric alcohols, for instance the complex ester derived from trimethylol propane, caprylic acid and sebacic acid.

Suitable polyesters are those derived from any aliphatic dicarboxylic acid having from 4 to 14 carbon atoms and at least one aliphatic dihydric alcohol having from 3 to 12 carbon atoms, e.g. those derived from azelaic acid or sebacic acid and 2,2,4-trimethylhexane- 1,6-diol.

The compound of formula I according to the invention are active as additives in lubricants even when used in very small amounts. They are admixed to the lubricants advantageously in an amount of 0.01 to 5 % by weight, preferably in an amount of 0.05 to 3 % by weight and particularly preferably in an amount of 0.1 to 1 % by weight, in each case based on the lubricant.

The lubricating oils applicational media can also contain other additives which may be added to improve the basic properties of lubricants e.g. metal passivators, viscosity-index improvers, pour-point depressants, dispersing agents, detergents, additional rust inhibitors, extreme pressure additives, anti-wear additives and antioxidants.

A series of such compounds can be found, for example, in the above list "1. Antioxidants", in particular items 1.1 to 1.19. The following additives must be mentioned additionally by way of example:

### Examples of other antioxidants:

Aliphatic or aromatic phosphites, esters of thiodipropionic acid or of thiodiacetic acid, or salts of dithiocarbamic or dithiophosphoric acid, 2,2,12,12-tetramethyl-5,9-dihydroxy-3,7,11 -trithiatridecane and 2,2,15,15-tetramethyl-5,12-dihydroxy-3,7,10,14-tetrathiahexadecane.

### Examples of metal deactivators, for example for copper, are:

a) Benzotriazoles and derivatives thereof, for example 4- or 5-alkylbenzotriazoles (e.g. tolutriazole) and derivatives thereof, 4,5,6,7-tetrahydrobenzotriazole and 5,5'-methylenebisbenzotriazole; Mannich bases of benzotriazole or tolutriazole, e.g. 1-[bis(2-ethylhexyl)aminomethyl)tolutriazole and 1-[bis(2-ethylhexyl)aminomethyl)benzotriazole; and alkoxyalkylbenzotriazoles such as 1-(nonyloxymethyl)-benzotriazole, 1-(1 -butoxyethyl)benzotriazole and 1-(1-cyclohexyloxybutyl)-tolutriazole.
b) 1,2,4-Triazoles and derivatives thereof, for example 3-alkyl(or aryl)-1,2,4-triazoles, and Mannich bases of 1,2,4-triazoles, such as 1-[bis(2-ethylhexyl)aminomethyl-1,2,4-triazole; alkoxyalkyl-1,2,4-triazoles such as 1-(1-butoxyethyl)-1,2,4-triazole; and acylated 3-amino-1,2,4-triazoles.
c) Imidazole derivatives, for example 4,4'-methylenebis(2-undecyl-5-methylimidazole) and bis[(N-methyl)imidazol-2-yl]carbinol octyl ether.
d) Sulfur-containing heterocyclic compounds, for example 2-mercaptobenzothiazole, 2,5-dimercapto-1,3,4-thiadiazole and derivatives thereof; and 3,5-bis[di(2-ethylhexyl)aminomethyl]-1,3,4-thiadiazolin- 2-one.
e) Amino compounds, for example salicylidenepropylenediamine, salicylaminoguanidine and salts thereof.

### Examples of rust inhibitors are:

a) Organic acids, their esters, metal salts, amine salts and anhydrides, for example alkyl- and alkenylsuccinic acids and their partial esters with alcohols, diols or hydroxycarboxylic acids, partial amides of alkyl- and alkenylsuccinic acids, 4-nonylphenoxyacetic acid, alkoxy- and alkoxyethoxycarboxylic acids such as dodecyloxyacetic acid, dodecyloxy(ethoxy)acetic acid and the amine salts thereof, and also N-oleoylsarcosine, sorbitan monooleate, lead naphthenate, alkenylsuccinic anhydrides, for example dodecenylsuccinic anhydride, 2-carboxymethyl-1-dodecyl-3-methylglycerol and the amine salts thereof.
b) Nitrogen-containing compounds, for example:
   I. Primary, secondary or tertiary aliphatic or cycloaliphatic amines and amine salts of organic and inorganic acids, for example oil-soluble alkylammonium carboxylates, and also 1-[N,N-bis(2-hydroxyethyl)amino]-3-(4-nonylphenoxy)propan-2-ol.
   II. Heterocyclic compounds, for example: substituted imidazolines and oxazolines, and 2-heptadecenyl-1-(2-hydroxyethyl)imidazoline.
c) Phosphorus-containing compounds, for example: Amine salts of phosphoric acid partial esters or phosphonic acid partial esters, and zinc dialkyldithiophosphates.
d) Sulfur-containing compounds, for example: barium dinonylnaphthalenesulfonates, calcium petroleum sulfonates, alkylthio-substituted aliphatic carboxylic acids, esters of aliphatic 2-sulfocarboxylic acids and salts thereof.
e) Glycerol derivatives, for example: glycerol monooleate, 1-(alkylphenoxy)-3-(2-hydroxyethyl)glycerols, 1-(alkylphenoxy)-3-(2,3-dihydroxypropyl)glycerols and 2-carboxyalkyl-1,3-dialkylglycerols.

### Examples of viscosity index improvers are:

Polyacrylates, polymethacrylates, vinylpyrrolidone/methacrylate copolymers, polyvinylpyrrolidones, polybutenes, olefin copolymers, styrene/acrylate copolymers and polyethers.

### Examples of pour-point depressants are:

Polymethacrylate and alkylated naphthalene derivatives.

### Examples of dispersants/surfactants are:

Polybutenylsuccinic amides or -imides, polybutenylphosphonic acid derivatives and basic magnesium, calcium and barium sulfonates, phenolates and salicylates.

### Examples of antiwear additives are:

Sulfur- and/or phosphorus- and/or halogen-containing compounds, e.g. sulfurised olefins and vegetable oils, zinc dialkyldithiophosphates, alkylated triphenyl phosphates, tritolyl phosphate, tricresyl phosphate, chlorinated paraffins, alkyl and aryl di- and trisulfides, amine salts of mono- and dialkyl phosphates, amine salts of methylphosphonic acid, diethanolaminomethyltolyltriazole, bis(2-ethylhexyl)aminomethyltolyltriazole, derivatives of 2,5-dimercapto-1,3,4-thiadiazole, ethyl 3-[(diisopropoxyphosphinothioyl)thio]propionate, triphenyl thiophosphate (triphenylphosphorothioate), tris(alkylphenyl) phosphorothioate and mixtures thereof (for example tris(isononylphenyl) phosphorothioate), diphenyl monononylphenyl phosphorothioate, isobutylphenyl diphenyl phosphorothioate, the dodecylamine salt of 3-hydroxy-1,3-thiaphosphetane 3-oxide, trithiophosphoric acid 5,5,5-tris[isooctyl 2-acetate], derivatives of 2-mercaptobenzothiazole such as 1-[N,N-bis-(2-ethylhexyl)aminomethyl]-2-mercapto- 1H-1,3-benzothiazole, and ethoxycarbonyl-5-octyldithiocarbamate.

Accordingly, a preferred embodiment of this invention is the use of compounds of formula I for stabilizing organic materials against oxidative, thermal or light-induced degradation.

The instant compounds of formula I according to the invention are preferably used as processing stabilizers (thermostabilizers) in thermoplastic polymers.

The novel compounds of formula I are distinguished by their markedly good stability to hydrolysis and their advantageous colour behaviour, i.e. minor discoloration of the organic materials during processing.

Organic materials stabilized with the novel compounds are particularly well protected against light-induced degradation.

Accordingly, the invention also relates to a process for stabilizing an organic material against oxidative, thermal or light-induced degradation, which process comprises incorporating in, or applying to, said material at least one compound of formula I.

The following Examples illustrate the invention more fully. Parts and percentages are by weight.

### Example 1: Preparation of 6-Chloro-2,4,8,10-tetra-tert-butyl-dibenzo[d,f][1,3,2]dioxaphosphepin

To a solution of 55.2 g (130 mmol) of 2,2'-bis(4,6-di-tert-butylphenol) and 1.82 ml (19 mmol) of 1-methyl-2-pyrrolidinone in 400 ml of toluene at ambient temperature is added dropwise 16.6 ml (19 mmol) of phosphorus trichloride. After the addition is complete, the reaction mixture is heated at reflux for 18 hours. After cooling to ambient temperature, the toluene is removed in vacuo from the reaction mass. The reaction mass is then recrystallized from 300 ml of acetonitrile. The recrystallization solvent is decanted from the reaction residue which is then dried under vacuum to give 39.9 g (64.5%) yield of an off-white solid as the title compound melting at 183-186°C. Analysis: Calcd for C₂₈H₄ClO₂P: C, 70.8; H, 8.4. Found: C, 70.6; H, 8.5.

### Example 2: Preparation of 6-Oxo-2,4,8,10-tetra-tert-butyl-dibenzo[d,f][1,3,2]dioxaphosphepin

To a solution of 6.32 g (13 mmol) of the compound of Example 1 in 150 ml of toluene at ambient temperature is added dropwise a solution of 0.24 ml (13 mmol) of distilled water in 3.0 ml (22 mmol) of triethylamine. After the addition is complete, the reaction mixture is stirred at ambient temperature for 15 minutes. The reaction solvent is removed in vacue and the reaction mass is then recrystallized twice with 50 ml of acetonitrile. The recrystallization solvent is removed under vacuum and the residue is dried under vacuum to afford the title compound in a yield of 5.2 g (86.3%) as an off-white solid melting at 218°C. Analysis: Calcd for C₂₈H₄₁O₃P: C, 73.6; H, 9.1. Found: C, 73.2; H, 9.7.

### Example 3: Preparation of 6- {[2,4,8,10-Tetra-tert-butyl-dibenzo[d,f][1,3,2]dioxaphosphepin-6-yl]oxy}-2,4,8,10-tetra-tert-butyl-dibenzo[d,f][1,3,2]dioxaphosphepin

To a suspension of 0.18 g (7.5 mmol) of sodium hydride in 50 ml of dry tetrahydrofuran is added dropwise a solution of 3.56 g (7.8 mmol) of the compound of Example 2 in 80 ml of dry tetrahydrofuran. After addition is complete, the reaction mixture is heated to 60°C for 9.5 hours. The reaction mixture is then cooled to about 0°C. To the reaction mixture is added 3.67 g (7.7 mmol) of the compound of Example 1 at 3°C. The reaction mixture is stirred for 14 hours at ambient temperature. The reaction solvent is removed under vacuum and the residue is a crude product which is purified by chromatography (hexane/-ethyl acetate = 95:5). The purified product is then recrystallized once from acetonitrile and then from 2-butanone to yield the title compound as a white solid melting at 269°C.

Analysis: Calcd for C₅₆H₈₀O₅P₂: C, 75.1; H, 9.0. Found: C, 74.8; H, 9.1.

### Example 4: Preparation of 6-Chloro-2,4,8,10-tetra-tert-butyl-12H-dibenzo[d,g][1,3,2]-dioxaphosphocin

To a solution of 25.0 g (0.059 mol) of 2,2'-methylenebis(4,6-di-tert-butylphenol) and 0.57 ml (5.9 mmol) of 1-methyl-2-pyrrolidinone in 275 ml of toluene at ambient temperature is added dropwise 5.16 ml (0.059 mol) of phosphorus trichloride. After the addition is complete, the reaction mixture is refluxed for eight hours. After cooling the mixture to ambient temperature, the toluene is removed in vacuo and the reaction mass is recrystallized twice from 250 ml of 98% acetonitrile and 2% toluene (% by volume) in acetonitrile. The recrystallization solvent is removed by decantation and the residue is dried under vacuum to give 21.4 g (79% yield) of the title compound as an off-white solid melting at 227-230°C. Analysis: Calcd for C₂H₄₂ClO₂P: C, 71.2; H, 8.7. Found: C, 71.1; H, 8.9.

### Example 5: Preparation of 6-Oxo-2,4,8,10-tetra-tert-butyl-12H-dibenzo[d,g][1,3,2]dioxaphosphocin

To a solution of 8.9 g (0.019 mol) of the compound of Example 4 in 150 ml of toluene at ambient temperature is added dropwise a solution of 0.34 ml (0.019 mol) of distilled water in 4.0 ml (0.029 mol) of triethylamine. After the addition is complete, the reaction mixture is stirred at ambient temperature for 15 minutes. The reaction solvent is removed under vacuum and the residue is recrystallized twice with 50 ml of acetonitrile. The acetonitrile is then removed in vacuo and the residue is dried under vacuum to give 2.4 g (79.5% yield) of the title compound as an off-white solid melting at 164°C. Analysis: Calcd for C₂₉H₄₃O₃P: C, 74.0; H, 9.2. Found: C, 73.3; H, 9.8.

### Example 6: Preparation of 6-{[2,4,8,10-Tetra-tert-butyl-12H-dibenzo[d,g][1,3,2]dioxaphosphocin-6-yl]oxy}-2,4,8,10-tetra-tert-butyl-12H-dibenzo[d,g][1,3,2]dioxaphosphocin

To a solution of 2.0 g (4.3 mmol) of the compound of Example 5 in 150 ml of toluene is added 2.1 g (4.3 mmol) of the compound of Example 4 and 3.0 ml (22 mmol) of triethylamine at ambient temperature. The reaction mixture is stirred at room temperature for 14 hours. The solvent is removed under vacuum and the residue is recrystallized twice from acetonitrile to give the title compound as a white solid melting at 249-252°C. Analysis: Calcd for C₅₈H₈₄O₅P₂: C, 75.4; H, 9.2. Found: C, 75.1; H, 9.5.

### Example 7: Preparation of 6-Chloro-2,4,8,10-tetra-tert-butyl-12-methyl-dibenzo[d,g]-[1,3,2]dioxaphosphocin

To a solution of 50.9 g (0.12 mol) of 2,2'-ethylidenebis(4,6-di-tert-butylphenol) and 1.73 ml (0.018 mol) of 1-methyl-2-pyrrolidinone in 275 ml of toluene at ambient temperature is added dropwise 15.7 ml (0.18 mol) of phosphorus trichloride. After the addition is complete, the reaction mixture is heated at reflux for 18 hours. After cooling to room temperature, the toluene is removed in vacuo and the residue is then recrystallized twice from 250 ml of acetonitrile. The acetonitrile is decanted from the product which is dried under vacuum to give 21.0 g (34.8% yield) of the title compound as an off-white solid melting at 194-198°C. Analysis: Calcd for C₃₀H₄₄ClO₂P: C, 71.6; H, 8.8. Found: C, 71.6; H, 9.1.

### Example 8: Preparation of 6-Oxo-2,4,8,10-tetra-tert-butyl-12-methyl-dibenzo[d,g][1,3,2]-dioxaphosphocin

To a solution of 5.5 g (11 mmol) of the compound of Example 7 in 100 ml of toluene at ambient temperature is added dropwise a solution of 0.20 ml (11 mmol) of distilled water in 3.0 ml (22 mmol) of triethylamine. After the addition is complete, the reaction mixture is stirred at room temperature for 15 minutes. The toluene is removed under vacuum and the residue is recrystallized twice from 50 ml of diethyl ether. The ether is removed in vacuo and the residue is dried under vacuum to give 3.95 g (74% yield) of the title compound as an off-white solid melting at 209°C. Analysis: Calcd for C₃₀H₄₅O₃P: C, 74.3; H, 9.4. Found: C, 74.0; H, 9.9.

### Example 9: Preparation of 6-{[2,4,8,10-Tetra-tert-butyl-12-methyl-dibenzo[d,g][1,3,2]dioxaphosphocin-6-yl]oxy}-2,4,8,10-tetra-tert-butyl-12-methyl-dibenzo[d,g][1,3,2]dioxaphosphocin

To a solution of 17.3 g (36 mmol) of the compound of Example 8 in 250 ml of dry tetrahydrofuran (THF) is added 1.0 g (41 mmol) of sodium hydride at 3°C. After the addition is complete, the reaction mixture is allowed to warm to room temperature. The reaction mixture is then stirred for 14 hours at ambient temperature. To the reaction mixture is then added 14.8 g( 29 mmol) of the compound of Example 7 at ambient temperature. After 48 hours, the reaction mixture is filtered and the filtrate is concentrated under vacuum. The residue is purified by flash chromatography with 1% ethyl acetate/99% hexane to give the title compound as a white solid melting at 281-285°C. Analysis: Calcd for C₆₀H₈₈O₅P₂: C, 75.7; H, 9.3. Found: C, 75.3; H, 9.7.

### Example 10: Preparation of 6-{[2,4,8,10-Tetra-tert-butyl-12-methyl-dibenzo[d,g][1,3,2]-dioxaphosphocin-6-yl]oxy}-2,4,8,10-tetra-tert-butyl-12-methyl-dibenzo[d,g][1,3,2]dioxaphosphocin

To a solution of 5.44 g (11 mmol) of the compound of Example 8 in 120 ml of toluene and 1.7 ml (13 mmol) of triethylamine is added 5.53 g (11 mmol) of the compound of Example 7 at ambient temperature. The reaction mixture is stirred at room temperature for 7 days. The toluene is then removed under vacuum and the residue is recrystallized from acetonitrile. The recrystallized product is then recrystallized a second time from 98% acetonitrile/2% toluene; and finally a third time from hexane to give the title compound as a white solid melting at 302-305°C. Analysis: Calcd for C₆₀H₈₈O₅P₂: C, 75.7; H, 9.3. Found: C, 75.2; H, 9.5.

### Example 11: Preparation of 6-{[2,4,8,10-Tetra-tert-butyl-dibenzo[d,f][1,3 ,2]dioxaphosphepin-6-yl]oxy}-2,4,8,10-tetra-tert-butyl-12H-dibenzo[d,g][1,3,2]dioxaphosphocin

To a solution of 3.06 g (6.5 mmol) of the compound of Example 5 in 125 ml of toluene is added 3.09 g (6.5 mmol) of the compound of Example 1 and 1.8 ml (13 mmol) of triethylamine. The reaction mixture is stirred at room temperature for 4.5 hours. The toluene is removed under vacuum and the residue is recrystallized from 98% acetonitrile/2% toluene. The product isolated is a mixture containing the title compound as one component as identified by ³¹P nmr.

### Example 12: Process Stabilization of Polypropylene at 274°C

The base formulation comprises unstabilized, high yield/high selectivity Spheripol polypropylene (PROFAX® 6501, Himont) containing 0.075% by weight of calcium stearate. The test additives are incorporated into the polyproyplene by dry blending using a minimum amount of methylene chloride solvent. The solvent is then removed by evaporation under reduced pressure. The stabilized resin formulation is extruded at 90 rpm from a 2.54 cm diameter extruder (screw to wall clearance adjusted tighter than normal for harsher than normal processing conditions) at 274°C with a residence time of 90 seconds. After each of the first and fifth extrusions, the melt flow rate (in grams/10 minutes) is determined by ASTM method D1238 on the pellets obtained from the extruder. A substantial increase in the melt flow denotes pronounced chain degradation, i.e. poor stabilization. The results are given in the table 1 below.

**Table 1:**

| Additive | Concentration (% by weight) | Melt Flow Rate after | |
|---|---|---|---|
| | | 1 Extrusion | 5 Extrusions |
| - | - | 12.4 | 55.7 |
| Compound of Example 3 | 0.075 | 6.8 | 15.3 |

These results show that the stabilized composition of the instant invention provides greatly improved melt flow stabilization to polypropylene.

Similar results are observed when the compound of Example 9 is used to stabilize polypropylene in place of the compound of Example 3.

### Example 13: Process Stabilization of Polypropylene at 274°C

Following the procedure of Example 12, polypropylene containing a phenolic antioxidant in combination with an instant compound is extruded and the melt flow rate (in grams/10 minutes) determined by ASTM method D1238 on the pellets obtained from the extruder after each of the first and fifth extrusions. The results are given in the table 2 below.

**Table 2:**

| Additive | Concentration (% by weight) | Melt Flow Rate after | |
|---|---|---|---|
| | | 1 Extrusion | 5 Extrusions |
| AO A | 0.075 | 8.3 | 13.9 |
| AO A plus | 0.075 | 5.6 | 8.3 |
| Compound of Example 1 | 0.075 | | |

AO A is neopentanetetrayl tetrakis(3,5-di-tert-butyl-4-hydroxyhydrocinnamate).

The combination of a phenolic antioxidant plus an instant compound provides excellent melt flow stabilization; better stabilization than obtained by the use of a phenolic antioxidant alone.

Similar results are observed when the compound of Example 9 is used in place of the compound of Example 3 in conjunction with a phenolic antioxidant to stabilize polypropylene.

## Claims

1. A cyclic pyrophosphite of formula I 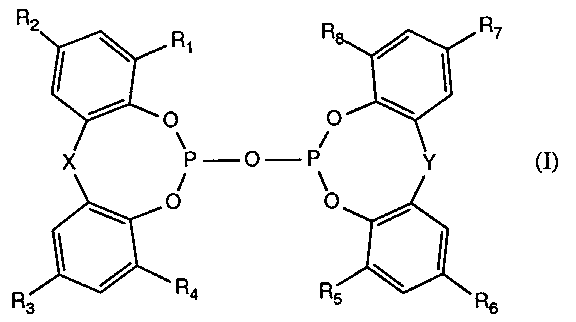 wherein
X and Y are independently a direct bond, -S- or -CR₉R₁₀-,
R₁, R₂, R₃, R₄, R₅, R₆, R₇ and R₈ are independently hydrogen, alkyl of 1 to 18 carbon atoms, cycloalkyl of 5 to 12 carbon atoms or phenylalkyl of 7 to 15 carbon atoms,
R₉ is hydrogen or alkyl of 1 to 18 carbon atoms, and
R₁₀ is hydrogen, alkyl of 1 to 18 carbon atoms or phenyl.

2. A compound according to claim 1, wherein
X and Y are independently a direct bond or -CR₉R₁₀-,
R₁, R₂, R₃, R₄, R₅, R₆, R₇ and R₈ are independently hydrogen, alkyl of 1 to 12 carbon atoms, cycloalkyl of 5 to 8 carbon atoms or phenylalkyl of 7 to 12 carbon atoms,
R₉ is hydrogen or alkyl of 1 to 12 carbon atoms, and
R₁₀ is hydrogen, alkyl of 1 to 12 carbon atoms or phenyl.

3. A compound according to claim 1, wherein
R₁, R₂, R₃, R₄, R₅, R₆, R₇ and R₈ are independently alkyl of 1 to 8 carbon atoms or cyclohexyl.

4. A compound according to claim 1, wherein
R₁, R₂, R₃, R₄, R₅, R₆, R₇ and R₈ are independently alkyl of 1 to 4 carbon atoms.

5. A compound according to claim 1, wherein
X and Y are independently a direct bond or -CR₉R₁₀-,
R₉ is hydrogen, and
R₁₀ is hydrogen, methyl or phenyl.

6. A compound according to claim 1, wherein
X and Y are independently a direct bond or -CR₉R₁₀-,
R₁, R₂, R₃, R₄, R₅, R₆, R₇ and R₈ are tert-butyl,
R₉ is hydrogen, and
R₁₀ is hydrogen or methyl.

7. A composition comprising
(a) an organic material susceptible to oxidative, thermal or light-induced degradation, and
(b) an effective stabilizing amount of a compound of formula I according to claim 1

8. A composition according to claim 7, comprising further additives in addition to the components (a) and (b).

9. A composition according to claim 7, wherein the further additives are phenolic antioxidants, light stabilizers or/and processing stabilizers.

10. A composition according to claim 8, wherein the further additive is at least one compound of the benzofuran-2-one type.

11. A composition according to claim 7, wherein component (a) is a natural, semi-synthetic or synthetic polymer.

12. A composition according to claim 7, wherein component (a) is a thermoplastic polymer.

13. A composition according to claim 7, wherein component (a) is a polyolefin.

14. A composition according to claim 7, wherein component (a) is polyethylene or polypropylene.

15. A composition according to claim 7, which contains component (b) in an amount of 0.01 to 5 %, based on the weight of component (a).

16. Use of a compound of formula I as defined in claim 1 as stabilizer for protecting organic materials against oxidative, thermal or light-induced degradation.

17. Use according to claim 16 as processing stabilizers (thermostabilizers) in thermoplastic polymers.

18. A process for the stabilization of an organic material against oxidative, thermal or light-induced degradation, which process comprises incorporating in, or applying to, said material at least one compound of formula I as defined in claim 1.
